# EUROPÄISCHE PATENTANMELDUNG

(11) **EP 4 725 749 A1**
(43) Veröffentlichungstag der Anmeldung: **15.04.2026**
(21) Anmeldenummer: 25201831.2
(22) Anmeldetag: 12.09.2025
(51) Int. Cl.: B60L 53/16, E05B 79/20, E05B 81/90

(54) **VERRIEGELUNGSEINRICHTUNG FÜR EIN KRAFTFAHRZEUG MIT EINER NOTENTRIEGELUNGSVORRICHTUNG**

(30) Priorität: 11.10.2024 DE 102024209937
(71) Anmelder: VOLKSWAGEN AG, 38440 Wolfsburg (DE)
(72) Erfinder: Schwarz, Tobias, 38440 Wolfsburg (DE)

(57) **Zusammenfassung**

Die Erfindung betrifft eine Verriegelungseinrichtung (1) für ein Kraftfahrzeug, insbesondere Ladesteckerverriegelung, die dazu ausgebildet ist, bei ihrer Ansteuerung einen Ladestecker an einer Ladedose (2) formschlüssig durch ein verlagerbares Verriegelungselement (3) zu verriegeln, wobei die Verriegelungseinrichtung (1) ein Gehäuse (7) aufweist, in welchem zumindest ein ansteuerbarer Aktuator (4) und ein den Aktuator (4) mit dem verlagerbaren Verriegelungselement (3) verbindendes Getriebe (5) zumindest im Wesentlichen angeordnet sind, und wobei das Verriegelungselement (3) durch den Aktuator (4) in eine Verriegelungsstellung und in eine Freigabestellung verlagerbar ist, und mit einer Notentriegelungsvorrichtung (8), die einen Seilzug (9) aufweist, der mit der Verriegelungseinrichtung (1) derart verbunden ist, dass durch Beaufschlagen des Seilzugs (9) mit einer Zugkraft das Verriegelungselement (3) in die Freigabestellung verlagerbar ist. Es ist vorgesehen, dass das Gehäuse (5) an einer Gehäusewand einen Einführtrichter (10) für den Seilzug (9) aufweist, der eine kreisförmige Grundform mit einer eine Durchführöffnung (14) ausbildenden Innenwand (13) aufweist, wobei die Innenwand (13) einen Trichterradius derart aufweist, dass die Innenwand (13) eine konvexe Wölbung (15) aufweist, die eine Stirnwand (18) des Einführtrichters (10) zumindest bereichsweise ausbildend zu einem Außenrand des Einführtrichters (10) führt.

## Beschreibung

Die vorliegende Erfindung betrifft eine Verriegelungseinrichtung für ein Kraftfahrzeug, insbesondere Ladesteckerverriegelung, die dazu ausgebildet ist, bei ihrer Ansteuerung einen Ladestecker an einer Ladedose formschlüssig durch ein verlagerbares Verriegelungselement zu verriegeln, wobei die Verriegelungseinrichtung ein Gehäuse aufweist, in welchem zumindest ein ansteuerbarer Aktuator und ein den Aktuator mit dem verlagerbaren Verriegelungselement verbindendes Getriebe zumindest im Wesentlichen angeordnet sind, und wobei das Verriegelungselement durch den Aktuator in eine Verriegelungsstellung und in eine Freigabestellung verlagerbar ist, und mit einer Notentriegelungsvorrichtung, die einen Seilzug aufweist, der mit der Verriegelungseinrichtung derart verbunden ist, dass durch Beaufschlagung des Seilzugs mit einer Zugkraft das Verriegelungselement in die Freigabestellung verlagerbar ist.

Verriegelungseinrichtungen der eingangs genannten Art sind aus dem Stand der Technik bekannt. So offenbart beispielsweise die Offenlegungsschrift DE 10 2021 132 380 A1 eine gattungsgemäße Verriegelungseinrichtung für eine Ladedose eines elektrischen Antriebssystems eines Kraftfahrzeugs. Damit ein Ladevorgang nicht ungewollt unterbrochen werden kann, ist es bekannt, den Ladestecker in der Ladedose während des Ladevorgangs durch die Verriegelungseinrichtung zu verriegeln. Dadurch ist insbesondere ein unbefugtes Entfernen des Ladesteckers von der Ladedose sicher verhindert. Die Verriegelungseinrichtung weist in der Regel einen Elektromotor als Aktuator auf, durch welchen das Verriegeln und Entriegeln beziehungsweise das Verlagern eine Verriegelungselements erfolgt, welches in einer Sperrstellung formschlüssig mit Ladedose und Ladestecker den Ladestecker verriegelnd zusammenwirkt und in einer Freigabestellung den Ladestecker frei gibt. In der Regel ist dabei das Verriegelungselement durch ein Getriebe mit dem Elektromotor zu seiner Verlagerung verbunden beziehungsweise gekoppelt. Fällt die Elektronik der Ansteuerung oder der Verriegelungseinrichtung aus, ist ein Entfernen des Ladesteckers von der Ladedose nicht mehr ohne Weiteres möglich. Daher ist derartigen Verriegelungseinrichtungen in der Regel außerdem eine Notentriegelungsvorrichtung zugeordnet, mittels welcher ein Benutzer die Steckverbindung entriegeln kann. Die oben genannte Druckschrift schlägt hierzu vor, einen Seilzug einzusetzen, der mit der Verriegelungseinrichtung verbunden ist, und bei Aufbringen einer (ausreichenden) Zugkraft auf den Seilzug das Verriegelungselement in die Freigabestellung verlagert. Aufgrund der Bauraumbedingungen von Kraftfahrzeugen, die sich von Kraftfahrzeug zu Kraftfahrzeug stark unterscheiden können, sind bekannte Notentriegelungsvorrichtungen stets an das jeweilige Kraftfahrzeug individuell anzupassen, um einen einwandfreien Betrieb zu gewährleisten.

Der vorliegenden Erfindung liegt die Aufgabe zugrunde, eine verbesserte Verriegelungseinrichtung zu schaffen, die auf kostengünstige Art und Weise eine Notentriegelungsvorrichtung bereitstellt, die einen flexiblen Einbau der Verriegelungseinrichtung auch in unterschiedlichen Kraftfahrzeugen, insbesondere in unterschiedlichen Ausrichtungen in Bezug auf den Verlauf des Seilzugs ermöglicht und insoweit eine individuelle Anpassung an einzelne Kraftfahrzeuge unnötig macht.

Die der Erfindung zugrunde liegende Aufgabe wird durch eine Verriegelungseinrichtung mit den Merkmalen des Anspruchs 1 gelöst. Diese hat den Vorteil, dass durch die vorteilhafte Ausbildung der Notentriegelungseinrichtung die Verriegelungseinrichtung in vielen verschiedenen Positionen und Ausrichtungen insbesondere im Bezug auf den Verlauf des Seilzugs in dem Kraftfahrzeug montierbar ist, wodurch sich der Vorteil ergibt, dass diese eine Verriegelungsvorrichtung in sehr vielen unterschiedlichen Kraftfahrzeugen eingesetzt werden kann, ohne dass sie an diese angepasst werden müsste. Es ist stets die Funktionsfähigkeit Notentriegelungsvorrichtung gewährleistet.

Erfindungsgemäß wird dies dadurch erreicht, dass das Gehäuse der Verriegelungseinrichtung an einer Gehäusewand einen Einführtrichter für den Seilzug aufweist, der eine kreisförmige Grundform mit einer eine Durchführöffnung ausbildenden Innenwand aufweist, wobei die Innenwand einen Trichterradius derart aufweist, dass die Innenwand eine konvexe Wölbung aufweist, die eine Stirnseite des Einführtrichters zumindest bereichsweise ausbildend zu einem Außenrand des Einführtrichters führt. Dem Gehäuse ist also ein Einführtrichter an einer Gehäusewand zugeordnet. Der Einführtrichter ist zunächst kreisförmig ausgebildet und wird zumindest durch eine Innenwand definiert. Die Innenwand bildet den eigentlichen Einführtrichter durch einen Trichterradius, der zu einer konvexen Wölbung der Innenwand führt. Durch die konvexe Wölbung wird die Innenwand, die bevorzugt abschnittsweise, insbesondere in einem der Gehäusewand zugewandten Abschnitt des Einführtrichters zylinderförmig ausgebildet ist, um die Durchführöffnung auszubilden, auf vorteilhafte Weise nach außen zu dem Außenrand geführt und bildet dabei stets eine vorteilhafte Führung für den Seilzug, der durch die Durchführöffnung des Einführtrichters in das Gehäuse der Verriegelungseinrichtung eingeführt oder einführbar ist. Durch die konvexe Wölbung ergibt sich ein vorteilhafter Biegeradius für den Seilzug am Bereich des Einführrichters. Dadurch wird gewährleistet, dass der Seilzug nicht axial in den Einführtrichter eingeführt sein muss, sondern außerhalb des Gehäuses auch in einem Winkel geneigt zur Axialerstreckung, insbesondere quer zur Axialerstreckung, aus dem Gehäuse herausgeführt sein kann. Dabei erfolgt durch den vorteilhaften Einführtrichter eine Umlenkung des Seilzugs um beispielsweise 90°. Durch die konvexe Ausbildung der Innenwand ist dabei gewährleistet, dass sich ein vorteilhafter Radius ergibt, der eine reibarme Führung des Seilzugs ermöglicht und dadurch insbesondere eine Notentriegelung aufgrund reduzierter Reibkräfte erleichtert. Durch die Kreisform ist außerdem gewährleistet, dass der Seilzug in jede Richtung quer zur Axialerstreckung des Einführtrichters von dem Einführtrichter weggeführt sein kann. Dadurch ergibt sich, dass unabhängig von der Anordnung der Verriegelungseinrichtung, insbesondere des Gehäuses an beispielsweise der Ladedose, der Seilzug durch den Einführtrichter stets in eine beliebige Richtung herausführbar und sicher betätigbar ist.

Vorzugsweise weist der Einführtrichter eine Außenwand auf, die zumindest abschnittsweise koaxial zu der Innenwand ausgebildet ist und an dem Außenrand an die Stirnwand des Einführtrichters, die zumindest teilweise von der Wölbung gebildet ist, angrenzt. Durch die Außenwand wird beispielsweise erreicht, dass der Einführtrichter axial insgesamt von dem Gehäuse vorsteht, sodass auch eine Umlenkung des Seilzugs um mehr als 90° möglich ist.

Gemäß einer bevorzugten Weiterbildung der Erfindung steht die Wölbung bereichsweise axial von einem Ende der Außenwand vor. Dadurch ergibt sich, dass auf vorteilhafte Weise der Seilzug auch um mehr als 90° durch den Einführtrichter umlenkbar ist, ohne dass dadurch der Seilzug an einer Kante des Einführtrichters reibt, was zu einem erhöhten Verschleiß und erhöhten notwendigen zum Entriegeln der Verriegelungsvorrichtung führen würde.

Weiterhin ist bevorzugt vorgesehen, dass die Wölbung in einen senkrecht zur Längserstreckung des Einführtrichters ausgerichteten Abschnitt der Stirnwand, die an die Außenwand angrenzt, übergeht. In diesem Fall kann die Wölbung über das Ende der Außenwand hinaus vorstehen, muss es aber nicht. In jedem Fall ist der Außenabschnitt der Wölbung oder die Stirnwand rechtwinklig oder vorzugsweise zumindest im Wesentlichen rechtwinklig zu der Außenwand ausgerichtet. In diesem Fall ist eine Umlenkung des Seilzugs um 90° sicher gewährleistet und gleichzeitig eine kompakte Bauweise der Verriegelungseinrichtung ermöglicht. Für die meisten Anwendungsfälle wird eine 90°-Umlenkung bereits ausreichen, um die Verriegelungseinrichtung in vielen unterschiedlichen Kraftfahrzeugen montieren und verwenden zu können.

Gemäß einer bevorzugten Ausführungsform der Erfindung erstreckt sich die Wölbung über den gesamten Umfang des Einführtrichters. Dabei ist die Wölbung in Umfangsrichtung gesehen konstant ausgebildet, sodass sich unabhängig von der Seilzugführung und der Anordnung oder Ausrichtung des Gehäuses an der Ladedose stets die vorteilhafte Führung des Seilzugs ergibt, wie sie obenstehend beschrieben wurde.

Besonders bevorzugt weist die Wölbung einen Trichterradius von mindestens 3 mm bis 8 mm, vorzugsweise von 4,2 mm bis 5,0 mm, insbesondere von 4,6 mm, auf. Hierdurch werden reduzierte Reibkräfte und eine vorteilhafte Seilzugführung gewährleistet, die die aufzubringende Zugkraft zum Lösen der Verriegelung kleinhalten und gleichzeitig eine sichere Betätigung gewährleisten.

Vorzugsweise geht die Stirnwand oder die Wölbung durch eine konvexe Krümmung in die Außenwand über. Somit ist die Kante zwischen Stirnwand und Wölbung vorzugsweise gerundet ausgebildet beziehungsweise gekrümmt, sodass an der Kante ein Hängenbleiben des Seilzugs in jedem Fall sicher verhindert ist, wodurch eine sichere Betätigung und eine Beschädigung des Seilzugs in jedem Fall verhindert werden.

Gemäß einer bevorzugten Ausführungsform der Erfindung ist der Einführtrichter in die Gehäusewand integriert ausgebildet. Dadurch ist der Einführtrichter Teil des Gehäuses und aus demselben Material wie das Gehäuse gefertigt. Hierdurch ergibt sich eine kostengünstige Realisierung der Verriegelungseinrichtung, die außerdem eine einfache Montage gewährleistet.

Gemäß einer alternativen Ausführungsform der Erfindung ist der Einführtrichter bevorzugt als separates Bauteil ausgebildet und an der Gehäusewand befestigt. Die Gehäusewand weist dabei eine Öffnung auf, welcher die Durchführöffnung des Einführtrichters zugeordnet ist, um den Seilzug direkt in das Gehäuse einführen zu können, wobei der Seilzug vorzugsweise mit dem Getriebe und/oder mit dem Verriegelungselement gekoppelt ist. Durch die Ausführung als separates Bauteil ergibt sich außerdem der Vorteil, dass der Einführtrichter aus einem Material gefertigt werden kann, das optimal auf den Seilzug abgestimmt ist, um Reibung zwischen Seilzug und Einführtrichter zu reduzieren. So ist der Einführtrichter beispielsweise aus einem Metall gefertigt, das vorteilhafte Gleiteigenschaften für den Seilzug, der bevorzugt ebenfalls aus Metall gefertigt ist, gewährleistet.

Vorzugsweise ist der Einführtrichter aus einem Material gefertigt, das sich von dem Material des Gehäuses unterscheidet. Dadurch können Einführtrichter und Gehäuse auf ihre jeweilige Aufgabe und Funktion optimal abgestimmt werden.

Vorzugsweise ist der Seilzug einendig mit dem Getriebe verbunden, um bei Zugbeaufschlagung das Verriegelungselement in die Freigabestellung zu verlagern. Der Seilzug wirkt somit dem Getriebe zusammen und nicht direkt mit dem Verriegelungselement. Wird der Seilzug betätigt beziehungsweise mit einer Zugkraft beaufschlagt, wird somit das Getriebe verlagert oder angetrieben, um das Verriegelungselement in die Freigabestellung zu bewegen. Alternativ ist der Seilzug mit dem Verriegelungselement direkt verbunden, wenn dieses unabhängig von dem Getriebe in die Freigabestellung verlagerbar ist.

Im Folgenden soll die Erfindung anhand der Zeichnungen näher erläutert werden. Dazu zeigen
- Figur 1: eine Verriegelungseinrichtung einer Ladedose in einer vereinfachten Darstellung,
- Figur 2: eine perspektivische Detailansicht der Verriegelungseinrichtung.

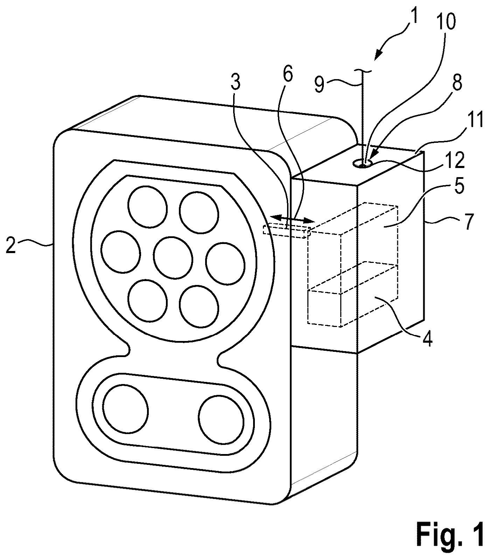

Figur 1 zeigt in einer vereinfachten perspektivischen Darstellung eine ansteuerbare Verriegelungseinrichtung 1 für eine Ladedose 2 eines Kraftfahrzeugs. Die Ladedose 2 ist dazu ausgebildet, einen hier nicht dargestellten Ladestecker für einen elektrischen Ladevorgang aufzunehmen. Um ein unbefugtes Entfernen des Ladesteckers von der Ladedose 2, insbesondere während des Ladevorgangs, zu verhindern, weist die Verriegelungseinrichtung 1 ein verlagerbares, insbesondere verschiebbares, Verriegelungselement 3 auf. Das Verriegelungselement 3 ist dazu ausgebildet in eine Aufnahme oder Öffnung des Ladesteckers eingeführt zu werden, wenn dieser in die Ladedose 2 eingesteckt ist, um dadurch den Ladestecker formschlüssig an der Ladedose 2 zu verriegeln.

Die Verriegelungseinrichtung 1 weist hierzu außerdem einen ansteuerbaren Aktuator 4, insbesondere in Form eines Elektromotors, auf. Der Elektromotor 4 ist insbesondere durch ein Getriebe 5 mit dem Verriegelungselement 3 verbunden, wobei das Getriebe 5 insbesondere dazu ausgebildet ist, die Rotationsbewegung des Elektromotors 4 in eine Translationsbewegung des Verriegelungselements 3, wie durch einen Pfeil 6 in Figur 1 gezeigt, zu wandeln.

Das Getriebe 5 und der Elektromotor 4 sind dabei zumindest im Wesentlichen in einem Gehäuse 7 angeordnet. Das Gehäuse 7 ist beispielsweise an der Ladedose 2 befestigt oder befestigbar.

Weiterhin weist die Verriegelungseinrichtung 1 eine Notentriegelungsvorrichtung 8 auf, die einen Seilzug 9 umfasst, der aus dem Gehäuse 7 der Verriegelungseinrichtung 1 herausgeführt ist und beispielsweise zu einer Handhabe geführt ist, die von einem Benutzer beispielsweise von innerhalb des Kraftfahrzeugs betätigbar ist, um eine Zugkraft auf den Seilzug 9 aufzubringen. Das Zugseil 9 ist somit einendig mit der Handhabe und anderendig insbesondere mit dem Getriebe 5 der Verriegelungseinrichtung 1 gekoppelt, sodass beim Beaufschlagen des Seilzugs 9 mit einer ausreichend hohen Zugkraft das Verriegelungselement 3 von der mit dem Ladestecker zusammenwirkenden Sperrstellung in eine den Ladestecker freigebende Freistellung verlagerbar ist. Optional handelt sich bei dem Seilzug 9 um einen Bowdenzug.

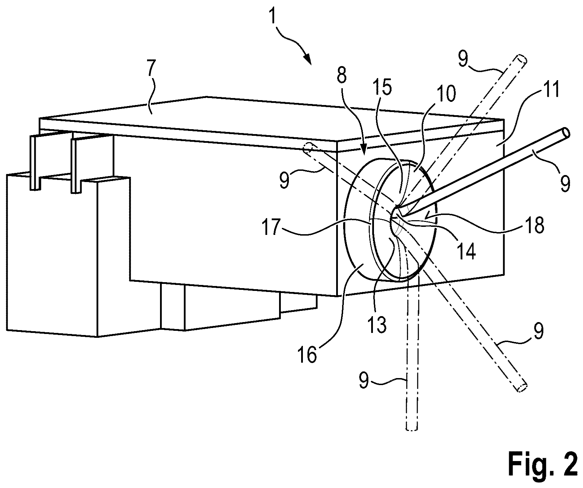

Figur 2 zeigt die Verriegelungseinrichtung 1 gemäß einem weiteren Ausführungsbeispiel in einer perspektivischen Teildarstellung. Die Notentriegelungsvorrichtung 8 weist einen Einführtrichter 10 auf, der an einer Gehäusewand 11 des Gehäuses 7 angeordnet ist, in welcher auch eine Öffnung 12 zur Durchführung des Seilzugs 9 zu dem Getriebe 5 ausgebildet ist. Gemäß dem Ausführungsbeispiel von Figur 2 ist der Einführtrichter 10 als separates Bauteil ausgebildet und an der Außenseite der Gehäusewand 11 angeordnet. Gemäß dem Ausführungsbeispiel von Figur 1 ist der Einführtrichter 10 in das Gehäuse 7 beziehungsweise die Gehäusewand 11 integriert ausgebildet.

Der Einführtrichter weist zumindest eine Innenwand 13 auf, die abschnittsweise zylinderförmig ausgebildet ist und eine Durchführöffnung 14 für den Seilzug 9 ausbildet, die fluchtend mit der Öffnung 12 in der Gehäusewand 11 ausgebildet beziehungsweise ausgerichtet ist, beziehungsweise die Öffnung 12 ausbildet. Die Innenwand 13 weist eine Wölbung 15 mit einem Radius R auf, der vorzugsweise zwischen 4,2 und 5,0 mm liegt, und besonders bevorzugt 4,6 mm beträgt. Die Wölbung 15 ist dabei konvex ausgebildet, sodass sie sich von dem zylinderförmigen Abschnitt der Innenwand 13 bis zu einem Außenrand des Einführtrichters 10 erstreckt. In dem Ausführungsbeispiel von Figur 2 grenzt dabei die Innenwand 13 beziehungsweise die Wölbung 15 an eine Außenwand 16 des Einführtrichters 10 an. Dabei geht die Wölbung 15 mittels einer vorteilhaften Krümmung 17 in die Außenwand 16 über, sodass keine scharfe Kante zwischen Wölbung 15 und Außenwand 16 verbleibt. Insbesondere führt die Krümmung 17 die Wölbung 15 weiter, sodass keine Kante am Übergang von Wölbung 15 zu Krümmung 17 ergibt.

Die Wölbung 15 erstreckt sich vorliegend bis zu der Außenwand 16 und bildet somit außerdem eine Stirnwand 18 des Einführtrichters 10 aus, die durch die Wölbung ebenfalls konvex gewölbt ist. Weil der Einführtrichter 10 bevorzugt kreissymmetrisch ausgebildet ist, erstreckt sich auch die Wölbung 15 über den gesamten Umfang des Einführtrichters 10 in konstanter Weise.

Durch die vorteilhafte Ausbildung des Einführtrichters 10 ist gewährleistet, dass der Seilzug 9 in eine beliebige Richtung außerhalb des Gehäuses 7 beziehungsweise des Einführtrichters 10 weiterführbar ist, ohne dass sich dadurch die Betriebseigenschaften für die Notentriegelungsvorrichtung 8 verändern. So erlaubt der vorteilhafte Einführtrichter 10 eine Umlenkung des Seilzugs 9 von mindestens 90° im Bezug auf die Axialerstreckung der Durchführöffnung. Durch die Kreissymmetrie ist gewährleistet, dass der Seilzug 9 in jede beliebige Richtung herausführbar ist und zudem bis zu mindestens 90° umgelenkt werden kann.

Vorzugsweise ist der Einführtrichter 10 gemäß dem Ausführungsbeispiel von Figur 2 aus einem Material gefertigt, das sich von dem Material des Gehäuses 7 unterscheidet, sodass das Gehäuse 7 einerseits und der Einführtrichter 10 andererseits auf ihre jeweilige Funktion in Bezug auf die Materialwahl optimal ausgeschaltet werden können. So weist der Einführtrichter 10 insbesondere ein Material auf, das einen vorteilhaften geringen Reibkoeffizienten für den Seilzug 9 gewährleistet, während das Gehäuse 7 beispielsweise in Bezug auf seine Stabilität und Dichtheit optimiert ist.

Weil der Seilzug 9 direkt in das Gehäuse eingeführt ist und somit innerhalb des Gehäuses 7 mit dem Aktuator 4 und/oder dem Getriebe 5 und/oder dem Verriegelungselement 3 zusammenwirkt, ist die Verriegelungsvorrichtung 1 mit Notentriegelungsvorrichtung 8 vorteilhaft bauraumsparend ausgebildet, wobei auch die Notentriegelungsvorrichtung 8 zu großen Teilen geschützt vor äußeren Einflüssen innerhalb des Gehäuses 7 liegt. Dadurch fällt der Aufwand für eine Abdichtung und einen Schutz der Notentriegelungsvorrichtung 8 selbst klein aus.

Durch die vorteilhafte Ausbildung des Einführtrichters 10 ergibt sich, dass die Verriegelungseinrichtung 1 in unterschiedlichsten Ausrichtungen und Anordnungen an der Ladedose 2 anordenbar ist und somit eine hohe Flexibilität in Bezug auf Anordnung und Ausrichtung gewährleistet. Dadurch ist die Verriegelungseinrichtung 1 an vielen unterschiedlichen Ladedosen 2 unterschiedlicher Kraftfahrzeuge einsetzbar.

Während gemäß dem vorliegenden Ausführungsbeispiel die Verriegelungseinrichtung 1 der Ladedose 2 zugeordnet ist, ist gemäß einem weiteren, hier nicht dargestellten Ausführungsbeispiel vorgesehen, dass die Verriegelungseinrichtung 1 an dem Ladestecker befestigt oder angeordnet ist.

### Bezugszeichenliste

- 1: Verriegelungseinrichtung
- 2: Ladedose
- 3: Verriegelungselement
- 4: Aktuator
- 5: Getriebe
- 6: Pfeil
- 7: Gehäuse
- 8: Notentriegelungsvorrichtung
- 9: Seilzug
- 10: Einführtrichter
- 11: Verriegelungseinrichtung
- 12: Öffnung
- 13: Innenwand
- 14: Durchführöffnung
- 15: Wölbung
- 16: Außenwand
- 17: Krümmung
- 18: Stirnwand

## Patentansprüche

1. Verriegelungseinrichtung (1) für ein Kraftfahrzeug, insbesondere Ladesteckerverriegelung, die dazu ausgebildet ist, bei ihrer Ansteuerung einen Ladestecker an einer Ladedose (2) formschlüssig durch ein verlagerbares Verriegelungselement (3) zu verriegeln, wobei die Verriegelungseinrichtung (1) ein Gehäuse (7) aufweist, in welchem zumindest ein ansteuerbarer Aktuator (4) und ein den Aktuator (4) mit dem verlagerbaren Verriegelungselement (3) verbindendes Getriebe (5) zumindest im Wesentlichen angeordnet sind, und wobei das Verriegelungselement (3) durch den Aktuator (4) in eine Verriegelungsstellung und in eine Freigabestellung verlagerbar ist, und mit einer Notentriegelungsvorrichtung (8), die einen Seilzug (9) aufweist, der mit der Verriegelungseinrichtung (1) derart verbunden ist, dass durch Beaufschlagen des Seilzugs (9) mit einer Zugkraft das Verriegelungselement (3) in die Freigabestellung verlagerbar ist, **dadurch gekennzeichnet, dass** das Gehäuse (5) an einer Gehäusewand einen Einführtrichter (10) für den Seilzug (9) aufweist, der eine kreisförmige Grundform mit einer eine Durchführöffnung (14) ausbildenden Innenwand (13) aufweist, wobei die Innenwand (13) einen Trichterradius derart aufweist, dass die Innenwand (13) eine konvexe Wölbung (15) aufweist, die eine Stirnwand (18) des Einführtrichters (10) zumindest bereichsweise ausbildend zu einem Außenrand des Einführtrichters (10) führt.

2. Verriegelungseinrichtung nach Anspruch 1, **dadurch gekennzeichnet, dass** der Einführtrichter (10) eine Außenwand (16) aufweist, die zumindest abschnittsweise koaxial zu der Innenwand (13) ausgebildet ist und an dem Außenrand (16) an die Stirnwand () des Einführtrichters (10) angrenzt.

3. Verriegelungseinrichtung nach einem der vorhergehenden Ansprüche, **dadurch gekennzeichnet, dass** die Wölbung (15) axial bereichsweise von einem Ende der Außenwand (16) vorsteht.

4. Verriegelungseinrichtung nach einem der vorhergehenden Ansprüche, **dadurch gekennzeichnet, dass** die Wölbung (15) in einen senkrecht zur Längserstreckung des Einführtrichters (10) ausgerichteten Abschnitt der Stirnwand (18), die an die Außenwand (16) angrenzt, übergeht.

5. Verriegelungseinrichtung nach einem der vorhergehenden Ansprüche, **dadurch gekennzeichnet, dass** sich die Wölbung (15) über den gesamten Umfang des Einführtrichters (10) erstreckt.

6. Verriegelungseinrichtung nach einem der vorhergehenden Ansprüche, **dadurch gekennzeichnet, dass** der Trichterradius der Wölbung (15) einen Radius von mindestens 3 mm bis 8 mm, insbesondere von 4,2 mm bis 5 mm, vorzugsweise 4,6 mm beträgt.

7. Verriegelungseinrichtung nach einem der vorhergehenden Ansprüche, **dadurch gekennzeichnet, dass** die Stirnwand oder die Wölbung (15) durch eine konvexe Krümmung (17) in die Außenwand (16) übergehen.

8. Verriegelungseinrichtung nach einem der vorhergehenden Ansprüche, **dadurch gekennzeichnet, dass** der Einführtrichter (10) in die Gehäusewand (11) integriert ausgebildet ist.

9. Verriegelungseinrichtung nach einem der vorhergehenden Ansprüche, **dadurch gekennzeichnet, dass** der Einführtrichter (10) als separates Bauteil ausgebildet und an der Gehäusewand (11) befestigt ist.

10. Verriegelungseinrichtung nach einem der vorhergehenden Ansprüche, **dadurch gekennzeichnet, dass** der Einführtrichter (10) aus einem Material gefertigt ist, das sich von dem Material des Gehäuses (5) unterscheidet.

11. Verriegelungseinrichtung nach einem der vorhergehenden Ansprüche, **dadurch gekennzeichnet, dass** der Seilzug (9) einendig mit dem Getriebe (5) verbunden ist, um bei Zugbeaufschlagung das Verrieglungselement (3) in die Freigabestellung zu verlagern.
